# FASCICULE DE BREVET EUROPEEN

(11) **EP 4 066 906 B1**
(45) Date de publication et mention de la délivrance du brevet: **27.11.2024**
(21) Numéro de dépôt: 22159310.6
(22) Date de dépôt: 28.02.2022
(51) Int. Cl.: A62B 35/00, A63B 27/00

(54) **DISPOSITIF DE FIXATION À UN POINT D'ANCRAGE ET PROCÉDÉ D'UTILISATION DU DISPOSITIF DE FIXATION**
VORRICHTUNG ZUR BEFESTIGUNG AN EINEN VERANKERUNGSPUNKT UND VERFAHREN ZUR ANWENDUNG EINER SOLCHEN BEFESTIGUNGSVORRICHTUNG
DEVICE FOR ATTACHMENT TO AN ANCHORING POINT AND METHOD OF USING THE ATTACHMENT DEVICE

(30) Priorité: 31.03.2021 FR 2103341
(43) Date de publication de la demande: 05.10.2022
(73) Titulaire: Zedel, 38920 Crolles (FR)
(72) Inventeur: MAURICE, Alain, 38660 Saint Hilaire du Touvet (FR); VUILLERMOZ, Benoît, 38400 Saint-Martin-d'Hères (FR); TARRAJAT, Jules, 38500 VOIRON (FR)
(74) Mandataire: Talbot, Alexandre

(56) Documents cités:
- DE-A1- 10 220 758
- FR-A1- 3 094 646
- US-A1- 2006 185 934

## Description

### Domaine technique

L'invention est relative à un dispositif de fixation à un point d'ancrage et à un procédé d'utilisation du dispositif de fixation.

### Technique antérieure

Dans le domaine de l'élagage, il est connu d'utiliser une fausse fourche qui définit un système d'ancrage temporaire. La fausse fourche est formée par une sangle qui forme un anneau autour d'une branche ou d'un tronc d'un arbre, de préférence pour étrangler son point d'ancrage. La fausse fourche possède une sangle munie de première et deuxième extrémités opposées et d'un anneau central. L'anneau central coopère avec la première extrémité de sorte que la première extrémité passe dans l'anneau de la sangle pour former une boucle coulissante qui entoure une branche ou le tronc de l'arbre. La première extrémité sert de point d'ancrage pour le grimpeur. Le grimpeur applique une force sur la première extrémité ce qui étrangle la branche de l'arbre en refermant la boucle coulissante. La première extrémité de la sangle est associée à un premier anneau métallique et la deuxième extrémité est associée à un deuxième anneau métallique dont la dimension interne est inférieure à celle du premier anneau métallique.

Le grimpeur installe sa corde de travail dans les premier et deuxième anneaux métalliques qui sont connectés à la branche de l'arbre pour former un point d'ancrage.

Une fois le travail d'élagage terminé, il est nécessaire de récupérer la sangle formant la fausse fourche.

Pour la récupération de la fausse fourche, le cochonnet de récupération est fixé à la corde de travail puis la corde de travail est tirée pour s'extraire hors des deux anneaux métalliques. Le cochonnet de récupération passe au travers du premier anneau métallique et se coince dans le deuxième anneau métallique de sorte que la traction appliquée sur la corde tire sur la deuxième extrémité de la sangle et ouvre la boucle coulissante.

Une fois la boucle de sangle ouverte, il est possible de faire tomber la sangle de l'arbre en tirant sur la corde de travail fixée à la sangle par le cochonnet de récupération.

Il apparaît qu'à l'usage cette solution n'est pas satisfaisante car il courant que la fausse fourche reste coincée et notamment dans l'arbre. Cela provient notamment de tous les frottements qui existent entre l'arbre, la sangle et la corde de travail. Il existe un besoin de réduire le risque de coincement de la fausse fourche dans l'arbre pour faciliter la récupération du dispositif formant la fausse fourche.

Le document DE10220758 divulgue un dispositif de suspension pour corde destinée à la descente en rappel d'arboristes. Le dispositif comporte un élément de fixation qui est destiné à faire le tour d'une branche. L'élément de fixation est terminé à une extrémité par un anneau rigide alors que l'autre extrémité est terminée par un noeud. Un boitier muni d'un mécanisme de serrage est monté entre les deux extrémités et le mécanisme de serrage permet de coincer le boitier contre l'élément de fixation. Le boitier est prolongé par une sangle de suspension terminée par une manille. La manille est traversée par la corde. La sangle de suspension traverse l'anneau. Une sangle de retenue est fixée au boitier de manière opposée à la sangle de suspension par rapport au passage de l'élément de fixation. La sangle de suspension est terminée par une manille traversée par la corde.

### Objet de l'invention

L'invention a pour but de remédier à ces inconvénients et, en particulier, de proposer un dispositif de fixation à un point d'ancrage qui est plus facile à utiliser que les configurations de l'art antérieur. A cet effet, le dispositif de fixation à un point d'ancrage comporte :
- un élément filaire comportant une première extrémité d'élément filaire et une deuxième extrémité d'élément filaire opposée, la première extrémité d'élément filaire possédant un premier anneau avec une première section de passage ;
- un bloqueur possédant une première extrémité de bloqueur et une deuxième extrémité de bloqueur opposée à la première extrémité de bloqueur, la première extrémité de bloqueur ayant une première section inférieure à la section de passage de sorte que la première extrémité de bloqueur s'insère dans le premier anneau, la deuxième extrémité de bloqueur présente une deuxième section plus large que la première section, la première extrémité de bloqueur définit un trou traversant destiné à recevoir une corde apte à supporter un utilisateur, le trou traversant possédant une deuxième section de passage, la deuxième extrémité de l'élément filaire étant fixée au bloqueur par un premier point de fixation disposé entre le trou traversant et la deuxième extrémité de bloqueur, le bloqueur étant une pièce rigide et incurvée entre la première extrémité et la deuxième extrémité;
- un cordon ayant une première extrémité de cordon fixée au bloqueur par un deuxième point de fixation et une deuxième extrémité de cordon possédant un deuxième anneau, le deuxième anneau définissant une troisième section de passage inférieure à la deuxième section de passage.

Selon un mode de réalisation, le bloqueur possède un galet monté mobile en rotation, le galet formant une bordure du trou traversant.

Avantageusement, la deuxième extrémité de bloqueur définit une rainure s'étendant selon la direction longitudinale reliant la première extrémité de bloqueur à la deuxième extrémité de bloqueur.

Dans un développement, le deuxième point de fixation sépare le premier point de fixation et la deuxième extrémité de bloqueur.

Préférentiellement, la deuxième section de la deuxième extrémité de bloqueur est supérieure à la première section de passage de l'anneau pour définir une surface d'arrêt de l'élément filaire le long du bloqueur.

Dans un mode de réalisation particulier, la surface d'arrêt est séparée du premier point de fixation d'une distance supérieure à la largeur de l'élément filaire.

Avantageusement, la surface d'arrêt est séparée du deuxième point de fixation d'une distance supérieure à la largeur de l'élément filaire.

De manière préférentielle, le bloqueur est incurvé et définit un angle de courbure au moins égal à 60° ou au moins égal à 90°.

Dans une configuration avantageuse, le premier point de fixation et le deuxième point de fixation sont disposés sur la face externe du bloqueur correspondant à la face la plus éloignée du centre de courbure.

Dans un mode de réalisation particulier, le cordon possède une longueur permettant de passer à travers le trou traversant du bloqueur.

Il est particulièrement avantageux de prévoir un dispositif de fixation qui comporte une corde passant à travers le trou traversant du bloqueur et le deuxième anneau du cordon, la corde étant terminée par un cochonnet ayant une section inférieure à la deuxième section de passage et supérieure à la troisième section de passage.

L'invention a également pour objet un procédé d'utilisation d'un dispositif de fixation qui facilite la désinstallation du produit de fixation en comparaison des procédés de l'art antérieur. Le procédé d'utilisation d'un dispositif de fixation selon l'une des configurations précédentes comporte les étapes suivantes :
- fournir le dispositif de fixation dans lequel l'élément filaire fait le tour du point d'ancrage, la boucle formée par l'élément filaire autour du point d'ancrage se refermant au moyen du bloqueur rigide et incurvé, la corde étant installée dans le deuxième anneau et dans le trou traversant ;
- tirer sur la corde de manière à ce que l'extrémité de la corde terminée par un cochonnet passe à travers le trou traversant et se bloque contre le deuxième anneau ;
- tirer sur la corde pour que l'anneau glisse le long du bloqueur jusqu'à ce que l'anneau quitte le bloqueur.

### Description sommaire des dessins

D'autres avantages et caractéristiques ressortiront plus clairement de la description qui va suivre de modes particuliers de réalisation et de mise en oeuvre de l'invention donnés à titre d'exemples non limitatifs et représentés aux dessins annexés, dans lesquels :

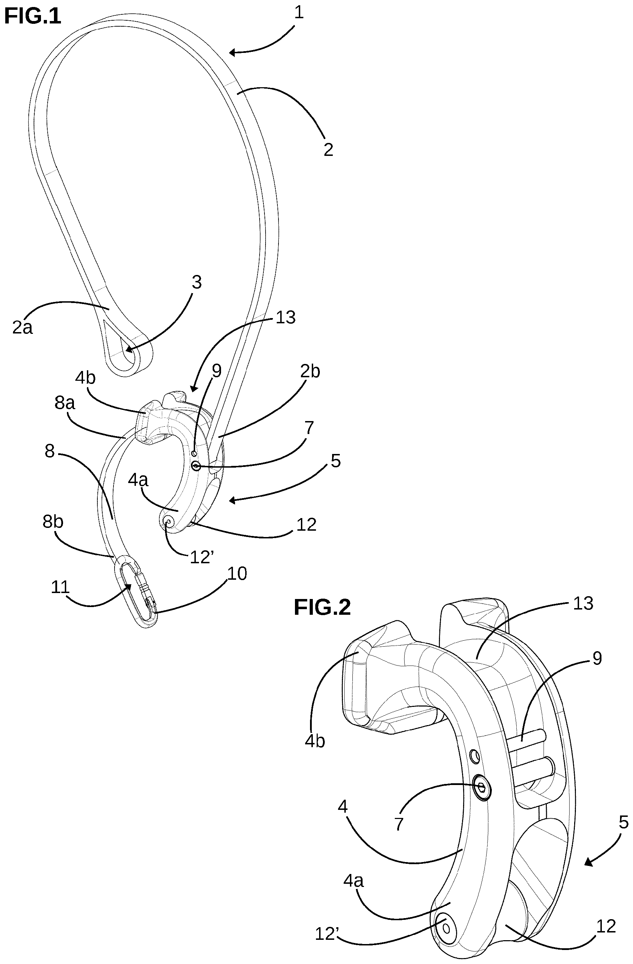

- la figure 1 illustre de manière schématique, une vue d'un dispositif de fixation ;
- la figure 2 illustre, de manière schématique, une vue en perspective du bloqueur
- la figure 3 illustre, de manière schématique, une autre vue en perspective du bloqueur ;
- la figure 4 illustre, de manière schématique, une vue de côté du bloqueur ;
- la figure 5 illustre, de manière schématique, une vue de face du bloqueur ;
- la figure 6 illustre, de manière schématique, un dispositif de fixation installé autour d'un tronc ou d'une branche ;
- la figure 7 illustre, de manière schématique, une première étape de désinstallation du dispositif de fixation ;
- la figure 8 illustre, de manière schématique, une deuxième étape de désinstallation du dispositif de fixation ;
- la figure 9 illustre, de manière schématique, une troisième étape de désinstallation du dispositif de fixation ;
- la figure 10 illustre, de manière schématique, quatrième étape de désinstallation du dispositif de fixation.

### Description des modes de réalisation

Le dispositif de fixation 1 à point d'ancrage est destiné à former un point de fixation sur un point d'ancrage qui est préférentiellement un tronc d'arbre A ou une branche B.

Le dispositif de fixation 1 à point d'ancrage comporte un élément filaire 2, comportant une première extrémité 2a d'élément filaire et une deuxième extrémité 2b d'élément filaire opposée. La première extrémité 2a d'élément filaire définit un premier anneau 3. Le premier anneau 3 définit un premier orifice traversant avec une première section de passage. L'élément filaire 2 est préférentiellement une sangle ou une corde. L'élément filaire 2 est dimensionné pour supporter le poids de l'utilisateur ou de la charge à soulever.

Le dispositif de fixation 1 à point d'ancrage comporte un bloqueur 4 qui possède une première extrémité 4a de bloqueur et une deuxième extrémité 4b de bloqueur opposée à la première extrémité 4a de bloqueur. La première extrémité 4a de bloqueur a une première section inférieure à la section de passage de sorte que la première extrémité 4a de bloqueur soit apte à s'insérer dans l'orifice traversant 3. La deuxième extrémité 4b de bloqueur présente une deuxième section plus large par rapport à la première section. La première extrémité 4a de bloqueur définit un trou traversant 5 destiné à recevoir une corde 6 destinée à supporter un utilisateur. Le deuxième orifice traversant 5 possède une deuxième section de passage. La deuxième extrémité de sangle 2b est fixée au bloqueur 4 par un premier point de fixation 7 disposé entre le trou traversant 5 et la deuxième extrémité 4b de bloqueur. Le bloqueur 4 peut être réalisé en matériau plastique, en matériau métallique ou une association de ces derniers. Le bloqueur 4 est dimensionné pour supporter le poids de la charge à soulever.

Le dispositif de fixation 1 à point d'ancrage comporte un cordon 8 ayant une première extrémité 8a de cordon fixée au bloqueur 4 par un deuxième point de fixation 9 et une deuxième extrémité de cordon 8b possédant un deuxième anneau 10. Le deuxième anneau 10 définit un deuxième orifice traversant 11 avec une troisième section de passage inférieure à la deuxième section de passage. Le deuxième anneau 10 peut être formé par un mousqueton, un maillon rapide ou tout autre connecteur ouvrable. Le cordon 8 peut présenter des performances mécaniques inférieures à celles de l'élément filaire 2 car il n'est pas destiné à supporter le poids de la charge à soulever. Dans les modes de réalisation illustrés, le cordon 8 est différent de l'élément filaire 2, mais il est également possible que le cordon 8 et l'élément filaire forment deux extrémités d'une même pièce, par exemple d'une même sangle. La pièce passe au travers d'un trou du bloqueur 4. Dans ce cas de figure, le premier point de fixation 7 est confondu avec le deuxième point de fixation 9.

Le bloqueur 4 est une pièce plus rigide que la sangle 2 ou une pièce rigide. Préférentiellement, le bloqueur 4 est une pièce dont la forme ne change pas lorsqu'elle est sollicitée mécaniquement jusqu'à la rupture mécanique du bloqueur 4. Lorsque l'utilisateur se suspend au moyen de la corde 6 en appui sur le bloqueur 4, le bloqueur 4 garde sa forme. Le glissement de l'anneau 3 le long du bloqueur 4 s'effectue sur une pièce dont la forme est connue.

La première extrémité 4a du bloqueur 4 s'insère dans l'anneau 3 de la première extrémité 2a de la sangle 2. La sangle 2 et le bloqueur 4 forment une boucle qui fait le tour du point d'ancrage. La première extrémité 4a reçoit la corde 6 destinée à supporter un utilisateur. La première extrémité 4a est sollicitée mécaniquement au moyen de la corde 6. La deuxième extrémité 4b est plus large que la première extrémité 4a ce qui complique ou empêche l'avancée de l'anneau 3 de l'élément filaire 2 sur toute la longueur du bloqueur 4. Le trou traversant 5 reçoit la corde 6. L'anneau 3 glisse le long de la première extrémité 4a sur une distance qui assure le non recouvrement du trou traversant 5 par l'anneau 3. Le poids de l'utilisateur appliqué sur la corde 6 sollicite le bloqueur 4 ce qui maintient la boucle C à l'état fermé.

Le cordon 8 sollicite la deuxième extrémité 4b du bloqueur 4. En tirant sur la deuxième extrémité 8b du cordon 8, le cordon sollicite la deuxième extrémité 4b. lorsque la boucle C est fermée, les deux extrémités 4a et 4b du bloqueur 4 sont séparées par l'anneau 3. L'application d'un effort sur l'une ou l'autre des extrémités du bloqueur déplace ce dernier vers une position qui tend vers l'ouverture ou vers une position qui assure le maintien en position fermé.

En tirant sur le cordon 8, le bloqueur 4 bascule autour du point de contact entre l'anneau 3 et le bloqueur 4 ce qui a pour effet de faire glisser l'anneau 3 vers la première extrémité 4a du bloqueur 4 jusqu'à ce que la boucle C s'ouvre. Lorsque l'utilisateur est suspendu au moyen de la corde 6 montée dans le trou traversant 5, le poids de l'utilisateur empêche le bloqueur 4 de basculer ou bloque l'anneau 3 contre le bloqueur 4.

Le bloqueur 4 ferme la boucle C qui entoure le point d'ancrage et l'orientation du bloqueur 4 autorise ou interdit l'ouverture de la boucle C. L'orientation du bloqueur 4 est définie par les forces appliquées aux deux extrémités du bloqueur 4. Le bloqueur 4 pivote par rapport l'anneau 3.

De manière préférentielle, le bloqueur 4 possède un galet 12 monté mobile en rotation, le galet 12 formant une bordure du premier orifice traversant 5. Le galet 12 est monté mobile en rotation de sorte que la première extrémité 4a soit munie d'une poulie. L'installation d'une poulie permet de faciliter le déplacement de la corde 6 en réduisant les frottements ce qui a également pour effet de réduire son usure. Il est particulièrement avantageux de former une poulie intégrée dans le bloqueur 4 de manière rigide afin de faciliter le déplacement de la corde sans augmenter le risque de coincement de la corde. Le galet 12 est monté mobile à rotation autour d'un arbre 12'. Lorsque l'utilisateur tire sur la corde 6, cette dernière vient en appui sur le galet 12.

Dans un mode de réalisation particulier, la deuxième extrémité 4b de bloqueur définit une rainure 13 s'étendant selon la direction longitudinale reliant la première extrémité 4a de bloqueur jusqu'à la deuxième extrémité 4b de bloqueur. La rainure 13 est configurée pour recevoir le cordon 8 et faciliter l'installation du cordon 8 dans le volume du bloqueur 4. Le cordon 8 s'étend depuis le deuxième point de fixation 9 en direction de la deuxième extrémité 4b. Lorsque l'on tire sur le cordon 8, ce dernier s'insère dans la rainure 13 et appuie sur la deuxième extrémité du bloqueur 4b ce qui tend à faire pivoter le bloqueur 4 pour diriger l'anneau 3 vers la première extrémité 4a.

Avantageusement, le deuxième point de fixation 9 sépare le premier point de fixation 7 et la deuxième extrémité de bloqueur 4. Cette configuration permet de simplifier la réalisation du bloqueur 4. En tirant sur la deuxième extrémité 8b, la position du deuxième point de fixation 9 facilite le basculement du bloqueur 4. Cette configuration est d'autant plus avantageuse que le bloqueur 4 présente une rainure 13 car cela facilite la rotation du bloqueur 4. Il est avantageux que le premier point de fixation 7 soit disposé dans la rainure 13. Il est également possible d'avoir le premier point de fixation 7 et le deuxième point de fixation 9 formé par le même élément. Par exemple, l'élément filaire 2 et le cordon 8 sont tous les deux terminés par une boucle ou au moins une boucle qui passe à travers une tige fixée au bloqueur pour former les deux points de fixation et il est avantageux de prévoir que les boucles soient traversées par la même tige. Il est également possible que l'élément filaire 2 soit fixé au bloqueur 4 et que le cordon 8 soit fixé à l'élément filaire 2 à proximité du premier de fixation qui forme alors le deuxième point de fixation. En alternative, le cordon 8 est fixé au bloqueur 4 et l'élément filaire 2 est fixé au cordon 8 à proximité du deuxième point de fixation 9 qui forme le premier point de fixation 7. Cependant, ces variantes sont moins efficaces pour la récupération du bloqueur 4.

Dans un mode de réalisation préférentiel, la deuxième section de la deuxième extrémité 4b de bloqueur est supérieure à la première section de passage de l'anneau 3 pour définir une surface d'arrêt de l'élément filaire 2 le long du bloqueur 4. En d'autres termes, la deuxième extrémité 4b est plus large que le trou formé par l'anneau 3. Le bloqueur 4 ne peut pas s'insérer dans l'anneau et le traverser sur toute sa longueur. Il est particulièrement avantageux d'avoir une deuxième extrémité 4b qui est assez large pour empêcher que l'anneau 3 quitte le bloqueur 4. De cette manière, la boucle formée par la sangle 2 est fermée par le bloqueur 4. L'effort appliqué par la corde 6 sur la première extrémité 4a bloque l'anneau 3 contre la deuxième extrémité 4b. La deuxième extrémité 4b forme une surface d'arrêt sur laquelle l'anneau 3 vient en butée.

Le bloqueur 4 présente un coefficient de glissement avec la sangle 2 qui est inférieur au coefficient de glissement entre la sangle 2 et la corde 6 ou le cordon 8.

Lorsque le cordon 8 s'étend depuis le deuxième point de fixation 9 vers la deuxième extrémité 4b, le cordon 8 passe à travers l'anneau 3 ce qui facilite le basculement du bloqueur 4 lorsque l'on tire sur le cordon 8. Préférentiellement, le bloqueur 4 est lisse pour faciliter le glissement de l'anneau 3.

De manière préférentielle, la surface d'arrêt est séparée du premier point de fixation 9 d'une distance supérieure à la largeur de l'élément filaire 2. De cette manière, une fois sous tension au moyen de la corde 6, la première extrémité 2a de l'élément filaire se place dans une position qui s'oppose nettement au basculement du bloqueur 4. Cette configuration améliore la sécurité en cas de sollicitation non désirée du cordon 8.

Avantageusement, la surface d'arrêt est séparée du deuxième point de fixation d'une distance supérieure à la largeur de l'élément filaire. Là encore cela améliore la sécurité en obligeant à avoir un déplacement du bloqueur sur une distance relativement importante avant d'avoir le basculement du bloqueur et l'ouverture de la boucle.

Dans un mode de réalisation particulièrement avantageux et illustré sur les figures, le bloqueur est incurvé entre la première extrémité 4a et la deuxième extrémité 4b. Il est intéressant d'avoir un bloqueur incurvé pour mieux différencier une position où le bloqueur maintient la boucle à l'état fermée et une position de bloqueur qui autorise l'ouverture de la boucle. L'utilisation d'un bloqueur incurvé permet de gagner en compacité ce qui réduit les risques de blocage dans les branches d'un arbre lors d'une opération d'élagage. Pour bien différencier les deux positions, il est avantageux d'avoir un bloqueur qui définit un angle de courbure au moins égal à 60°, de préférence au moins égale à 90. L'utilisation d'un bloqueur incurvé facilite également la libération de la boucle depuis le sol.

L'angle de courbure peut être représenté par l'angle formé par le plan tangent aux deux extrémités de la surface de glissement de l'anneau sur le bloqueur 4. Un plan tangent correspond à l'anneau bloqué sur le bloqueur, préférentiellement contre la surface d'arrêt. L'autre plan tangent correspond à l'anneau juste avant de quitter le bloqueur 4 pour ouvrir la boucle.

Afin de gagner en compacité, il est avantageux que le bloqueur présente un rayon de courbure moyen plus faible dans la deuxième extrémité que dans la première extrémité. La première extrémité 4a et la deuxième extrémité 4b peuvent être délimité par le premier point de fixation 7. Il est également avantageux que la deuxième extrémité possède une courbure plus importante que la première extrémité, par exemple un angle de courbure dans la deuxième extrémité qui est deux fois supérieure à l'angle de courbure dans la première extrémité.

De manière préférentielle, le premier point de fixation et le deuxième point de fixation sont disposés sur la face externe du bloqueur correspondant à la face la plus éloignée du centre de courbure du bloqueur 4.

Il est particulièrement avantageux que le cordon 8 possède une longueur permettant de passer à travers le trou traversant 5 du bloqueur 4. Lorsque la corde 6 est mise sous tension, le risque de solliciter le cordon 8 est plus faible car il pend à une hauteur plus faible que la première extrémité du bloqueur 4. Un tel mode de réalisation est illustré sur les figures.

Pour récupérer facilement le bloqueur, il est avantageux d'utiliser une corde 6 passant à travers le trou traversant 5 du bloqueur 6 et le deuxième orifice traversant du cordon 8. La corde 6 est terminée par un cochonnet 14 ayant une section inférieure à la deuxième section de passage et supérieure à la troisième section de passage. En alternative, une autre corde est fixée à la corde et l'autre corde possède le cochonnet.

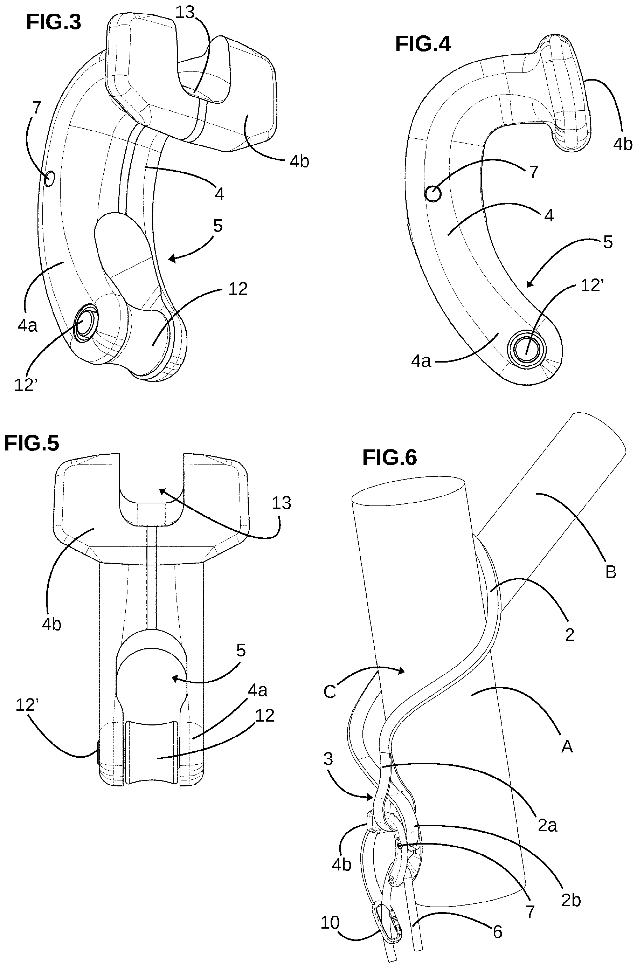

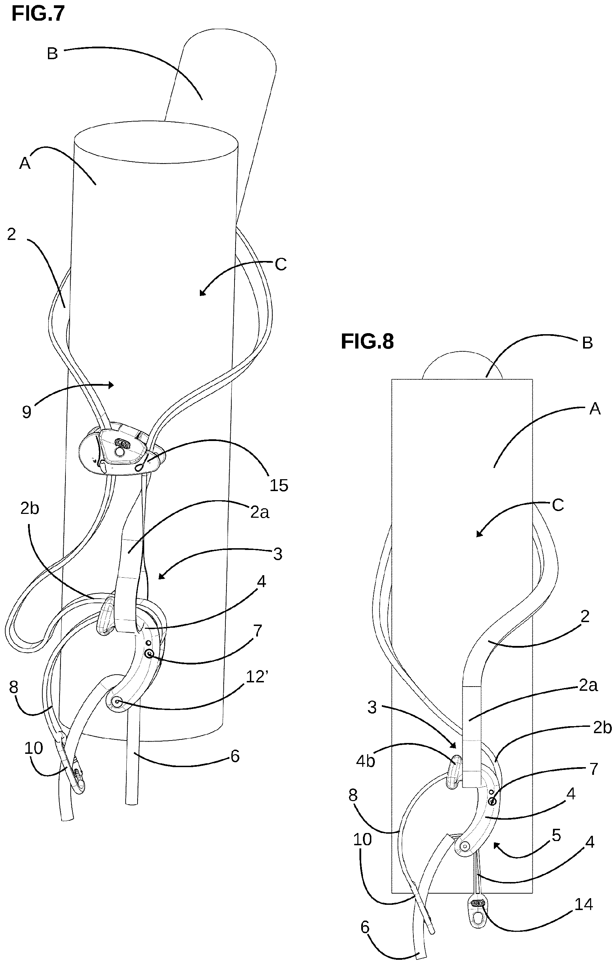

Pour former un point de suspension d'un utilisateur fixé à la corde 6, l'élément filaire 2 fait le tour du point d'ancrage. Sur les figures 6 et 7, l'élément filaire 2 fait le tour du tronc A et il prend appui sur une branche B. La boucle C formée par l'élément filaire 2 autour du tronc A se referme au moyen du bloqueur 4. Dans le mode de réalisation particulier illustré, la deuxième extrémité 2b de l'élément filaire 2 passe à travers l'anneau 3. La deuxième extrémité 4b du bloqueur 4 vient en appui sur l'anneau 3. Lorsque l'utilisateur est suspendu au moyen de la corde 6, la deuxième extrémité 4b force sur l'anneau 3 au moyen de la surface d'arrêt. La boucle C se tend. La corde 6 est installée dans le deuxième anneau 10 et dans le trou traversant 5. Dans le mode de réalisation particulier illustré à la figure 7, un bloqueur intermédiaire 15 est monté entre les deux extrémités de l'élément filaire 2. Le bloqueur intermédiaire permet de définir la longueur de la boucle C.

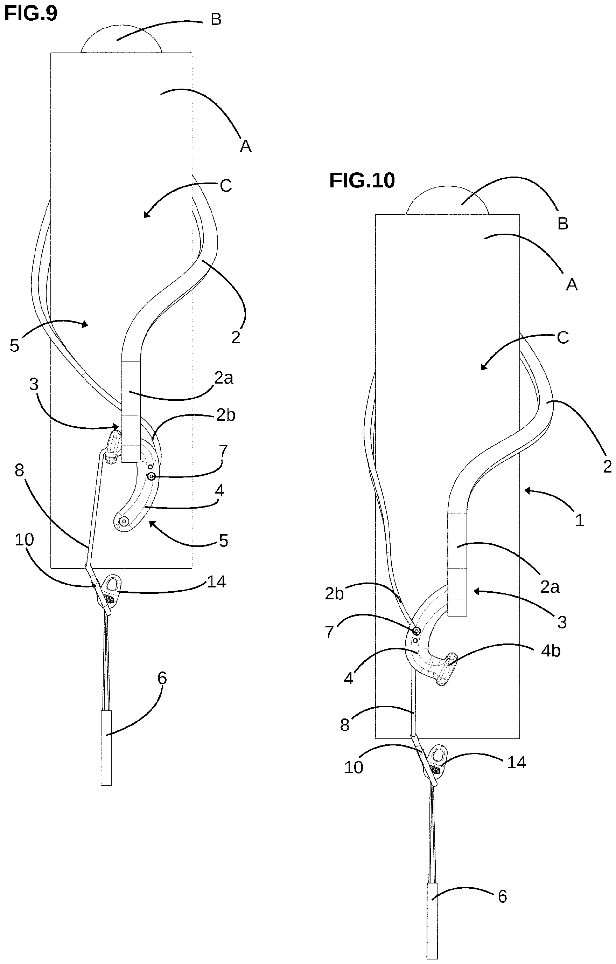

Pour libérer le dispositif de fixation et le récupérer après utilisation, on tire sur la corde 6 de manière à ce que l'extrémité de la corde 6 terminée par le cochonnet 14 passe à travers le trou traversant 5 et se bloque contre le deuxième anneau 10. Cette étape est illustrée aux figures 8 et 9.

Une fois le cochonnet 12 en contact du deuxième anneau 10, la traction appliquée sur la corde 6 se traduit en une traction sur le cordon 8 qui fait glisser l'anneau 3 le long du bloqueur 4 jusqu'à ce que le bloqueur s'échappe de l'anneau 3 et que la boucle C s'ouvre. Une fois la boucle C ouverte, en tirant sur la corde 6, l'élément filaire 2 peut glisser contre le tronc. Il est avantageux que l'anneau 3 soit formé par un repli de l'élément filaire 2. Le risque de voir l'élément filaire 2 ou l'anneau 3 se coincer autour du tronc est faible. Le bloqueur 4 et l'élément filaire 2 sont connectés à la corde 6 ce qui permet de faciliter leur récupération.

## Revendications

1. Dispositif de fixation (1) à point d'ancrage comprenant :
- un élément filaire (2) comportant une première extrémité (2a) d'élément filaire et une deuxième extrémité (2b) d'élément filaire opposée, la première extrémité (2a) d'élément filaire possédant un premier anneau (3) avec une première section de passage ;
- un bloqueur (4) possédant une première extrémité (4a) de bloqueur et une deuxième extrémité (4b) de bloqueur opposée à la première extrémité (4) de bloqueur, la première extrémité (4a) de bloqueur ayant une première section inférieure à la section de passage de sorte que la première extrémité (4a) de bloqueur s'insère dans le premier anneau (3), la deuxième extrémité (4b) de bloqueur présente une deuxième section plus large que la première section, la première extrémité (4a) de bloqueur définit un trou traversant (5) destiné à recevoir une corde (6) apte à supporter un utilisateur, le trou traversant (5) possédant une deuxième section de passage, la deuxième extrémité (2b) de l'élément filaire étant fixée au bloqueur (4) par un premier point de fixation (7) disposé entre le trou traversant (5) et la deuxième extrémité (4b) de bloqueur, le bloqueur (4) étant une pièce rigide et incurvée entre la première extrémité (4a) et la deuxième extrémité (4b) ;
- un cordon (8) ayant une première extrémité (8a) de cordon fixée au bloqueur (4) par un deuxième point de fixation (9) et une deuxième extrémité (8b) de cordon possédant un deuxième anneau (10), le deuxième anneau (10) définissant une troisième section de passage inférieure à la deuxième section de passage.

2. Dispositif de fixation (1) à point d'ancrage selon la revendication 1 dans lequel le bloqueur (4) possède un galet (12) monté mobile en rotation, le galet (12) formant une bordure du trou traversant (5).

3. Dispositif de fixation (1) à point d'ancrage selon l'une des revendications 1 et 2 dans lequel la deuxième extrémité (4b) de bloqueur définit une rainure (13) s'étendant selon la direction longitudinale reliant la première extrémité (4a) de bloqueur à la deuxième extrémité (4b) de bloqueur.

4. Dispositif de fixation (1) à point d'ancrage selon l'une quelconque des revendications 1 à 3 dans lequel le deuxième point de fixation (9) sépare le premier point de fixation (7) et la deuxième extrémité (4b) de bloqueur.

5. Dispositif de fixation (1) à point d'ancrage selon l'une quelconque des revendications 1 à 4 dans lequel la deuxième section de la deuxième extrémité (4b) de bloqueur est supérieure à la première section de passage de l'anneau (3) pour définir une surface d'arrêt de l'élément filaire (2) le long du bloqueur (4).

6. Dispositif de fixation (1) à point d'ancrage selon la revendication 5 dans lequel la surface d'arrêt est séparée du premier point de fixation (7) d'une distance supérieure à la largeur de l'élément filaire (2).

7. Dispositif de fixation (1) à point d'ancrage selon la revendication précédente dans lequel la surface d'arrêt est séparée du deuxième point de fixation (9) d'une distance supérieure à la largeur de l'élément filaire (2).

8. Dispositif de fixation (1) à point d'ancrage selon l'une quelconque des revendications 1 à 7 dans lequel le bloqueur (4) est incurvé et définit un angle de courbure au moins égal à 60°.

9. Dispositif de fixation (1) à point d'ancrage selon la revendication précédente dans lequel l'angle de courbure est au moins égal à 90°.

10. Dispositif de fixation (1) à point d'ancrage selon l'une quelconque des revendications 8 et 9 dans lequel le premier point de fixation (7) et le deuxième point de fixation (9) sont disposés sur la face externe du bloqueur (4) correspondant à la face la plus éloignée du centre de courbure.

11. Dispositif de fixation (1) à point d'ancrage selon l'une quelconque des revendications 1 à 10 dans lequel le cordon (8) possède une longueur permettant de passer à travers le trou traversant (5) du bloqueur (4).

12. Dispositif de fixation (1) à point d'ancrage selon l'une quelconque des revendications 1 à 11 comportant une corde (6) passant à travers le trou traversant (5) du bloqueur (4) et le deuxième anneau (10) du cordon (8), la corde (6) étant terminée par un cochonnet (14) ayant une section inférieure à la deuxième section de passage et supérieure à la troisième section de passage.

13. Procédé d'utilisation d'un dispositif de fixation (1) selon l'une des revendications précédentes comportant les étapes suivantes :
- fournir le dispositif de fixation (1) dans lequel l'élément filaire (2) fait le tour du point d'ancrage (A), la boucle (C) formée par l'élément filaire (2) autour du point d'ancrage (A) se refermant au moyen du bloqueur (4) rigide et incurvé, la corde (6) étant installée dans le deuxième anneau (10) et dans le trou traversant (5) ;
- tirer sur la corde (6) de manière à ce que l'extrémité de la corde (6) terminée par un cochonnet (14) passe à travers le trou traversant (5) et se bloque contre le deuxième anneau (10) ;
- tirer sur la corde (6) pour que l'anneau (3) glisse le long du bloqueur (4) jusqu'à ce que l'anneau (3) quitte le bloqueur (4).

## Patentansprüche

1. Vorrichtung zur Befestigung (1) an einen Verankerungspunkt, umfassend:
- ein Seilelement (2) mit einem ersten Seilelementende (2a) und einem entgegengesetzten zweiten Seilelementende (2b), wobei das erste Seilelementende (2a) einen ersten Ring (3) mit einem ersten Durchgangsquerschnitt aufweist;
- einen Blockierer (4), der ein erstes Blockiererende (4a) und ein zweites Blockiererende (4b) aufweist, das dem ersten Blockiererende (4) entgegengesetzt ist, wobei das erste Blockiererende (4a) einen ersten Querschnitt hat, der kleiner ist als der Durchgangsquerschnitt, sodass das erste Blockiererende (4a) sich in den ersten Ring (3) einführen lässt, das zweite Blockiererende (4b) einen zweiten Querschnitt hat, der breiter als der erste Querschnitt ist, wobei das erste Blockiererende (4a) ein Durchgangsloch (5) zur Aufnahme eines Seils (6) definiert, das geeignet ist, einen Benutzer zu tragen, wobei das Durchgangsloch (5) einen zweiten Durchgangsquerschnitt hat, das zweite Ende (2b) des Seilelements durch einen ersten Befestigungspunkt (7), der zwischen dem Durchgangsloch (5) und dem zweiten Blockiererende (4b) angeordnet ist, am Blockierer (4) befestigt ist, wobei der Blockierer (4) ein starres Teil ist, das zwischen dem ersten Ende (4a) und dem zweiten Ende (4b) gekrümmt ist;
- ein Band (8) mit einem ersten Bandende (8a), das durch einen zweiten Befestigungspunkt (9) am Blockierer (4) befestigt ist, und einem zweiten Bandende (8b), das einen zweiten Ring (10) aufweist, wobei der zweite Ring (10) einen dritten Durchgangsquerschnitt definiert, der kleiner als der zweite Durchgangsquerschnitt ist.

2. Vorrichtung zur Befestigung (1) an einen Verankerungspunkt nach Anspruch 1, wobei der Blockierer (4) eine Rolle (12) aufweist, die drehbeweglich montiert ist, wobei die Rolle (12) einen Rand des Durchgangslochs (5) bildet.

3. Vorrichtung zur Befestigung (1) an einen Verankerungspunkt nach einem der Ansprüche 1 und 2, wobei das zweite Blockiererende (4b) eine Nut (13) definiert, die sich in der Längsrichtung erstreckt und das erste Blockiererende (4a) mit dem zweiten Blockiererende (4b) verbindet.

4. Vorrichtung zur Befestigung (1) an einen Verankerungspunkt nach einem der Ansprüche 1 bis 3, wobei der zweite Befestigungspunkt (9) den ersten Befestigungspunkt (7) und das zweite Blockiererende (4b) trennt.

5. Vorrichtung zur Befestigung (1) an einen Verankerungspunkt nach einem der Ansprüche 1 bis 4, wobei der zweite Querschnitt des zweiten Blockiererendes (4b) größer ist als der erste Durchgangsquerschnitt des Rings (3), um eine Anschlagfläche für das Seilelement (2) entlang des Blockierers (4) zu definieren.

6. Vorrichtung zur Befestigung (1) an einen Verankerungspunkt nach Anspruch 5, wobei die Anschlagfläche um einen Abstand, der größer ist als die Breite des Seilelements (2), vom ersten Befestigungspunkt (7) getrennt ist.

7. Vorrichtung zur Befestigung (1) an einen Verankerungspunkt nach dem vorherigen Anspruch, wobei die Anschlagfläche um einen Abstand, der größer ist als die Breite des Seilelements (2), vom zweiten Befestigungspunkt (9) getrennt ist.

8. Vorrichtung zur Befestigung (1) an einen Verankerungspunkt nach einem der Ansprüche 1 bis 7, wobei der Blockierer (4) gekrümmt ist und einen Krümmungswinkel von mindestens 60° definiert.

9. Vorrichtung zur Befestigung (1) an einen Verankerungspunkt nach dem vorherigen Anspruch, wobei der Krümmungswinkel mindestens 90° beträgt.

10. Vorrichtung zur Befestigung (1) an einen Verankerungspunkt nach einem der Ansprüche 8 und 9, wobei der erste Befestigungspunkt (7) und der zweite Befestigungspunkt (9) auf der Außenseite des Blockierers (4) angeordnet sind, die der Seite entspricht, die vom Krümmungsmittelpunkt am weitesten entfernt ist.

11. Vorrichtung zur Befestigung (1) an einen Verankerungspunkt nach einem der Ansprüche 1 bis 10, wobei die Band (8) eine Länge hat, die den Durchgang durch das Durchgangsloch (5) des Blockierers (4) ermöglicht.

12. Vorrichtung zur Befestigung (1) an einen Verankerungspunkt nach einem der Ansprüche 1 bis 11, umfassend ein Seil (6), das durch das Durchgangsloch (5) des Blockierers (4) und den zweiten Ring (10) des Bands (8) verläuft, wobei das Seil (6) durch eine Abziehkugel (14) abgeschlossen wird, deren Querschnitt kleiner als der zweite Durchgangsquerschnitt und größer als der dritte Durchgangsquerschnitt ist.

13. Verfahren zur Verwendung einer Befestigungsvorrichtung (1) nach einem der vorherigen Ansprüche, umfassend die folgenden Schritte:
- Bereitstellen der Befestigungsvorrichtung (1), wobei das Seilelement (2) um den Verankerungspunkt (A) herum verläuft, wobei die Schlinge (C), die durch das Seilelement (2) um den Verankerungspunkt (A) herum gebildet wird, durch den starren und gekrümmten Blockierer (4) geschlossen wird, wobei das Seil (6) im zweiten Ring (10) und im Durchgangsloch (5) installiert ist;
- Ziehen an dem Seil (6), sodass das Ende des Seils (6), das durch eine Abziehkugel (14) abgeschlossen wird, durch das Durchgangsloch (5) verläuft und sich gegen den zweiten Ring (10) blockiert;
- Ziehen an dem Seil (6), damit der Ring (3) am Blockierer (4) entlang gleitet, bis der Ring (3) den Blockierer verlässt.

## Claims

1. Attachment device (1) to an anchor point comprising:
- a wire-like element (2) comprising a first wire-like element end (2a) and an opposite second wire-like element end (2b), the first wire-like element end (2a) having a first ring (3) with a first pass-through cross-section;
- a clamp (4) having a first clamp end (4a) and a second clamp end (4b) opposite the first clamp end (4), the first clamp end (4a) having a smaller first cross-section than the pass-through cross-section so that the first clamp end (4a) can be inserted in the first ring (3), the second clamp end (4b) presenting a second section that is larger than the first cross-section, the first clamp end (4a) defining a through hole (5) designed to receive a rope (6) able to support a user, the through hole (5) having a second pass-through cross-section, the second end (2b) of the wire-like element being fixed to the clamp (4) via a first attachment point (7) located between the through hole (5) and the second clamp end (4b), the clamp (4) being a rigid part that is curved between the first end (4a) and the second end (4b);
- a cord (8) having a first cord end (8a) fixed to the clamp (4) via a second attachment point (9) and a second cord end (8b) having a second ring (10), the second ring (10) defining a third pass-through cross-section that is smaller than the second pass-through cross-section.

2. Attachment device (1) to an anchor point according to claim 1 wherein the clamp (4) has a roller (12) mounted movable in rotation, the roller (12) forming one edge of the through hole (5).

3. Attachment device (1) to an anchor point according to one of claims 1 and 2 wherein the second clamp end (4b) defines a groove (13) extending in the longitudinal direction connecting the first clamp end (4a) to the second clamp end (4b).

4. Attachment device (1) to an anchor point according to any one of claims 1 to 3 wherein the second attachment point (9) separates the first attachment point (7) and the second clamp end (4b).

5. Attachment device (1) to an anchor point according to any one of claims 1 to 4 wherein the second cross-section of the second clamp end (4b) is larger than the first pass-through cross-section of the ring (3) to define a stop surface of the wire-like element (2) along the clamp (4).

6. Attachment device (1) to an anchor point according to claim 5 wherein the stop surface is separated from the first attachment point (7) by a larger distance than the width of the wire-like element (2).

7. Attachment device (1) to an anchor point according to the foregoing claim wherein the stop surface is separated from the second attachment point (9) by a larger distance than the width of the wire-like element (2).

8. Attachment device (1) to an anchor point according to any one of claims 1 to 7 wherein the clamp (4) is curved and defines an angle of curvature at least equal to 60°.

9. Attachment device (1) to an anchor point according to the foregoing claim wherein the angle of curvature is at least equal to 90°.

10. Attachment device (1) to an anchor point according to either one of claims 8 and 9 wherein the first attachment point (7) and the second attachment point (9) are located on the outer surface of the clamp (4) corresponding to the surface farthest from the centre of curvature.

11. Attachment device (1) to an anchor point according to any one of claims 1 to 10 wherein the cord (8) has a length enabling it to pass through the through hole (5) of the clamp (4).

12. Attachment device (1) to an anchor point according to any one of claims 1 to 11 comprising a rope (6) passing through the through hole (5) of the clamp (4) and the second ring (10) of the cord (8), the rope (6) being terminated by a retrieval ball (14) having a cross-section that is smaller than the second pass-through cross-section and larger than the third pass-through cross-section.

13. Method for using an attachment device (1) according to one of the foregoing claims comprising the following steps:
- providing the attachment device (1) in which the wire-like element (2) passes around the anchor point (A), the loop (C) formed by the wire-like element (2) around the anchor point (A) being closed by means of the rigid and curved clamp (4), the rope (6) being installed in the second ring (10) and in the through hole (5);
- pulling on the rope (6) so that the end of the rope (6) terminated by a retrieval ball (14) passes through the through hole (5) and is blocked against the second ring (10);
- pulling on the rope (6) so that the ring (3) slides along the clamp (4) until the ring (3) leaves the clamp (4).
